# EUROPÄISCHE PATENTSCHRIFT

(11) **EP 3 332 944 B1**
(45) Veröffentlichungstag und Bekanntmachung des Hinweises auf die Patenterteilung: **03.04.2019**
(21) Anmeldenummer: 16202739.5
(22) Anmeldetag: 07.12.2016
(51) Int. Cl.: B29C 53/48, B29D 23/20, B29B 13/02, B29C 53/38, B29C 65/02, B29C 65/78, B29L 23/20

(54) **VERFAHREN UND VORRICHTUNG ZUM HERSTELLEN VON TUBENKÖRPERN FÜR VERPACKUNGSTUBEN**
METHOD AND DEVICE FOR MANUFACTURING TUBE BODIES FOR PACKAGING TUBES
PROCÉDÉ ET DISPOSITIF DE PRODUCTION DE CORPS TUBULAIRES POUR TUBES D'EMBALLAGE

(43) Veröffentlichungstag der Anmeldung: 13.06.2018
(73) Patentinhaber: PackSys Global AG, 8630 Rüti ZH (CH)
(72) Erfinder: Läubli, Julius, 8645 Rapperswil-Jona (CH); Esser, Ulrich, 8630 Rüti (CH)
(74) Vertreter: Patentanwälte Behrmann Wagner PartG mbB

(56) Entgegenhaltungen:
- WO-A2-2009/125330
- CH-A5- 695 937
- DE-U1-202011 050 418
- US-A- 4 151 024

## Beschreibung

Die Erfindung betrifft ein Verfahren zum Herstellen von flexiblen, rohrförmigen Tubenkörpern für Verpackungstuben, insbesondere im Rahmen eines Tubenherstellungsprozesses gemäß dem Oberbegriff des Anspruchs 1. Im Rahmen des Verfahrens wird ein mindestens eine verschweißbare Kunststoffschicht aufweisendes oder ein daraus bestehendes Substratband, insbesondere ein mindestens eine verschweißbare Kunststoffschicht und eine Barriereschicht gegen Feuchtigkeit und/oder Sauerstoff aufweisendes Tubenlaminat, in eine Förderrichtung zu einer Schweißeinrichtung gefördert, wobei das Substratband zwei, insbesondere parallele sich in der Förderrichtung erstreckende äußere Längskanten aufweist. Das Substratband wird zu einem Tubenrohr unter Annäherung der Längskanten geformt, wobei gemäß einer ersten Alternative die Längskanten auf Stoß angeordnet werden, oder sich gemäß einer zweiten Alternative überlappen oder gemäß einer dritten Alternative unter Beibehaltung eines geringen Spaltes in Umfangsrichtung einander gegenüber angeordnet werden. Die Umformung des Substratbandes zu einem Tubenrohr erfolgt dabei mithilfe geeigneter Umformmittel wie Formbändern und/oder Formrollen, mit denen das Substratband um einen sich in der Förderrichtung erstreckenden Dorn umgeformt wird. Das Tubenrohr, genauer das Substratband wird im Bereich der Längskanten unter Ausbildung der Längsschweißnaht verschweißt und somit die Rohrform fixiert. Die Längserstreckungsrichtung der Längsschweißnaht fällt mit der Förderrichtung zusammen, die der Längsachse des resultierenden Tubenrohres sowie der resultierenden Tubenkörper entspricht. Im Rahmen des Verfahrens wird das Substratband zur Reduzierung von Kreisförmigkeitsfehlern vor und/oder während und/oder nach dem Verschweißen erwärmt. Bevorzugt wird das so erhaltene endlose Tubenrohr nach Abkühlen der Längsschweißnaht in gleichlange Tubenkörper abgelängt. Die erfindungsgemäße Vorrichtung umfasst hierzu weiterbildungsgemäß eine entsprechende der Schweißeinrichtung in der Förderrichtung nachgeordnete Ablängeinrichtung. Die Tubenkörper werden dann im weiteren Verlauf des Verfahrens mit Tubenkörpern ausgestattet bzw. verbunden. Besonders bevorzugt ist es, wenn das Verschweißen des Tubenrohres unter gleichzeitiger Anpressdruckbeaufschlagung im Bereich der Längskanten des Substratbandes erfolgt. Besonders zweckmäßig ist es das Tubenrohr, insbesondere vor einem fakultativen, jedoch bevorzugten Ablängvorgang im Bereich der Längsschweißnaht abzukühlen.

Ferner betrifft die Erfindung eine Vorrichtung gemäß dem Oberbegriff des Anspruchs 12 zum Herstellen von flexiblen, rohrförmigen Tubenkörpern für Verpackungstuben, die bevorzugt zur Durchführung des erfindungsgemäßen Verfahrens ausgebildet ist.

Das gattungsgemäße Verfahren und die gattungsgemäße Vorrichtung betreffen also das technische Gebiet der Kunststofftubenherstellung aus einem flachen Substratband, welches zu einer Rohrform geformt und diese zu deren Fixierung mit einer Längsschweißnaht versehen wird. Das gattungsgemäße Verfahren und die gattungsgemäße Vorrichtung betreffen also ausdrücklich nicht die Herstellung von Rohrkörpern mithilfe von Schrumpffolien (bei den erfindungsgemäß zur Anwendung kommenden Substratbändern handelt es sich ausdrücklich nicht um klassische Schrumpffoliensubstrate). Ebenso betreffen das gattungsgemäße Verfahren und die gattungsgemäße Vorrichtung nicht die Herstellung von Rohrkörpern durch unmittelbare Extrusion eines bereits umfangsgeschlossenen Körpers. Wesentlich ist, wie erwähnt, dass im Rahmen des erfindungsgemäßen Verfahrens und der erfindungsgemäßen Vorrichtung ein Tubenrohr aus einem flachen Substratband geformt und zur Fixierung der Rohrform im Bereich der Längskanten des Substratbandes mit einer Längsschweißnaht durch Anschmelzen mindestens einer Kunststoffschicht des Substratbandes erzeugt wird.

Bei einer solchen Herstellung von flexiblen, rohrförmigen Tubenkörpern im Rahmen der Kunststoff-Verpackungstubenherstellung besteht das Problem, dass es durch den Längsschweißschritt, bei dem die Längskanten eines Tubenlaminatbandes miteinander verschweißt werden zu unsymmetrischen Änderungen von Spannungen innerhalb des Substratbandes kommt, welche dazu führen, dass das Tubenrohr querschnittlich keine exakte kreisförmige Geometrie aufweist, sondern eher eine Birnen- bzw. Wassertropfenform.

Bereits aus der CH 695 937 A5 ist es bekannt, die Rundheit der Tubenkörper durch eine Wärmebehandlung zu verbessern, wozu gemäß der Lehre der Druckschrift die Temperatur des Tubenrohres homogenisiert wird.

Die WO 2009/125330 A2 greift diesen Gedanken auf und lehrt zur Vermeidung von Kreisförmigkeitsfehlern des Tubenrohres das Substratband so zu erwärmen, dass dessen Substratbandtemperatur in der Förderrichtung (Ablaufrichtung) des Substratbandes konstant ist. Verbesserungswürdig bei dem bekannten Verfahren ist die Prozess-Stabilität.

Die DE 20 2011 050 418 U1 offenbart zudem eine Vorrichtung zum Herstellen von Tubenkörpern für Verpackungstuben, die auf die Anmelderin zurückgeht. Diese beschreibt eine Vorrichtung, die neben Schweißmitteln zum Verschweißen einer Rohrform auch Temperiermittel zum definierten Erhitzen und/oder Kühlen eines Druckgases aufweist.

In der Industrie besteht Bedarf nach alternativen Verfahren zur Verbesserung der Rundheit von geschweißten Tubenrohren, die bevorzugt auch eine Erhöhung der Stabilität des endlosen Tubenrohres entlang seiner Längserstreckung, d.h. in der Förderrichtung zur Folge haben.

Ausgehend von dem vorgenannten Stand der Technik liegt der Erfindung daher die Aufgabe zugrunde, ein alternatives Verfahren zum Herstellen von flexiblen, rohrförmigen Tubenkörpern für Kunststoff-Verpackungstuben anzugeben, wobei das Verfahren hinsichtlich eines kreisförmigen Querschnitts zu optimierten Tubenrohren führen soll. Dabei ist es besonders bevorzugt, wenn das Verfahren zu einem stabileren Prozessablauf, d.h. einer erhöhten Prozessstabilität führt. Ferner besteht die Aufgabe darin, eine Vorrichtung anzugeben, mit der Kunststoff-Tubenkörper mit minimierten Kreisförmigkeitsfehlern herstellbar sind. Bevorzugt soll die Vorrichtung zur Ausführung des erfindungsgemäßen Verfahrens geeignet und bestimmt sein.

Diese Aufgabe wird hinsichtlich des Verfahrens mit den Merkmalen des Anspruchs 1 gelöst, wobei wie bei einem gattungsgemäßen Verfahren die Substratbandtemperatur in der Förderrichtung des Substratbandes gezielt variiert wird. Anders ausgedrückt wird die Temperatur des Substratbandes in Richtung seiner Längserstreckung moduliert. Noch anders ausgedrückt wird das Substratband mit einem Temperaturprofil versehen bzw. auf ein solches erwärmt, dass sich durch eine in der Förderrichtung, bevorzugt regelmäßig, variierende Substratbandtemperatur auszeichnet. Im Rahmen der Erfindung wird die Substratbandtemperatur bezogen auf einen feststehenden Beobachtungs- bzw. Messpunkt, relativ zu dem das Substratband in der Förderrichtung bewegt wird, zeitlich variiert. Hieraus resultieren dann örtlich gesehen in der Förderrichtung hintereinander angeordnete Substratbandabschnitte mit unterschiedlichen Temperaturen. Zur Temperaturvariation in der Förderrichtung, d.h. zur Realisierung einer in der Förderrichtung nicht konstanten Substratbandtemperatur wird der Energieeintrag in das Substratband erfindungsgemäß entsprechend variiert.

Hinsichtlich der Vorrichtung wird die Aufgabe mit den Merkmalen des Anspruchs 12 gelöst, wobei wie bei einer gattungsgemäßen Vorrichtung die Vorrichtung Substratbandtemperaturvariationsmittel zum variieren der Substratbandtemperatur in der Förderrichtung aufweist. Mit anderen Worten umfasst die erfindungsgemäße Substratbandtemperatur Variationsmittel mit denen das Substratband mit einem in der Förderrichtung, bevorzugt regelmäßig, schwankenden Temperaturprofil ausstattbar bzw. das Substratband auf ein solches Temperaturprofil bringbar ist. Die Substratbandvariationsmittel sind dabei derart ausgebildet, dass diese den erwähnten Energieeintrag in das Substratband variieren.

Vorteilhafte Weiterbildungen der Erfindungen sind in den Unteransprüchen angegeben.

In Abkehr der Lehre der WO 2009/125330 A2 liegt der Erfindung der Gedanke zugrunde, die Substratbandtemperatur in der Förderrichtung nicht konstant einzustellen, sondern die Substratbandtemperatur in der Förderrichtung zu variieren, d.h. zu modulieren, um somit ein Substratband zu erhalten, dessen Temperatur in der Förderrichtung, insbesondere um eine Durchschnittstemperatur schwankt. Anders ausgedrückt liegt der Erfindung im Abkehr vom Stand der Technik der Gedanke zugrunde, ein gattungsgemäßes Verfahren sowie eine gattungsgemäße Vorrichtung derart weiterzubilden, dass im Rahmen des Verfahrens und der Vorrichtung das Substratband bevorzugt vor und/oder während und/oder nach dem Schweißprozess mit einem in der Förderrichtung variierenden Temperaturprofil ausgestattet wird, also mit einem Temperaturprofil, das sich durch eine gezielte Variation der Substratbandtemperatur in der Förderrichtung auszeichnet. Besonders zweckmäßig ist eine Ausführungsform, bei der das in der Förderrichtung variierende Temperaturprofil in Förderrichtung vor der Schweißeinrichtung aufgebracht wird. Zur Realisierung des Verfahrensmerkmals der Substratbandtemperaturvariation in der Förderrichtung umfasst eine nach dem Konzept der Erfindung ausgebildete Vorrichtung Substratbandtemperaturvariationsmittel die ausgebildet und angeordnet sind, um die Substratbandtemperatur in der Förderrichtung zu variieren. Bevorzugt beaufschlagen die Substratbandtemperaturvariationsmittel das Substratband hierzu mit einer zeitlich schwankenden Erwärmungs- bzw. Heizenergie bzw. mit einem sich zeitlich ändernden sprich modulierten Temperatursignal. Überraschend wurde festgestellt, dass durch die Variation der Substratbandtemperatur in der Förderrichtung Kreisförmigkeitsfehler weitgehend eliminiert werden können. Gleichzeitig führt die erfindungsgemäße Variation der Substratbandtemperatur zu einer erhöhten Prozess-Stabilität. Die Anmelderin erklärt dies damit, dass bei einem in Längsrichtung gleichmäßig bzw. konstant erhitzten Substratband, wie dies in der WO 2009/125330 A2 beschrieben ist, eine in der Transport- bzw. Förderrichtung durchgängige Erwärmung und damit Erweichung resultiert, die zu einer in der Förderrichtung durchgehenden Schwächung des Substratbandes bzw. der Rohrform führt, die negativen Auswirkungen auf die Konstanz des Schweißprozesses bzw. der Schweißnaht wie auch die Stabilität des Förderprozesses hat und somit letztendlich einen negativen Einfluss sowohl auf die mechanische Stabilität als auch das äußere Erscheinungsbild der Schweißnaht der Tube hat. Im Rahmen des erfindungsgemäßen Verfahrens resultieren aufgrund der Temperaturvariation in der Förderrichtung immer wieder Bereiche geringerer Temperatur und damit erhöhter Stabilität, wodurch die Beanspruchung des Materials insgesamt reduziert wird, was dann überraschend eine erhöhte Prozess-Stabilität zur Folge hat. Die erfindungsgemäße Temperaturvariation hat zudem zur Folge, dass die wärmeren Substratbandabschnitte Temperaturen annehmen können, die über denen liegen, die mit dem bekannten Verfahren einer in der Förderrichtung homogenen Erwärmung aufgebracht werden können.

Die Erwärmung des Substratbandes erfolgt dabei in einem Bereich seitlich, d.h. in Richtung der Breitenerstreckung des Substratbandes benachbart zu der Längsschweißnaht bzw. für den bevorzugten Fall der Erwärmung des Substratbandes örtlich und zeitlich vor dem Schweißvorgang benachbart zu der späteren Position der Längsschweißnaht. Dabei ist es möglich die Schweißnaht bzw. den Bereich der späteren Schweißnaht von dem Temperaturprofil auszusparen, wobei eine Beaufschlagung mit dem schwankenden Temperaturprofil bevorzugt ist. Besonders zweckmäßig ist es, wenn das Substratband über den größten Teil seiner senkrecht zur Förderrichtung bzw. Längserstreckung des Substratbandes und senkrecht zur Materialstärke gemessenen Breitenerstreckung des Substratbandes mit dem in der Förderrichtung variierenden Temperaturprofil versehen wird. Ganz besonders bevorzugt ist es, wenn das Substratband über seine gesamte Breitenerstreckung in erfindungsgemäßer Weise mit in der Förderrichtung des Substratbandes variierender Substratbandtemperatur erwärmt wird.

Als besonderes zweckmäßig hat es sich herausgestellt, wenn die Substratbandtemperaturvariation in einem Temperaturbereich oberhalb von 40°C, insbesondere von 50°C, noch weiter bevorzugt oberhalb von 55°C, ganz besonders bevorzugt oberhalb von 60°C und unterhalb von 90°C, ganz besonders bevorzugt unterhalb von 80°C erfolgt. Mit anderen Worten liegen die Substratbandtemperaturschwankungen in Weiterbildung der Erfindung in dem vorgenannten Temperaturbereich, wobei durch die Substratbandschwankungen ein Schmelzen des Substratbandmaterials, wie dieses für den Schweißprozess notwendig ist vermieden werden soll.

Erfindungsgemäß ist vorgesehen, dass die Substratbandtemperatur in der Förderrichtung derart variiert wird, dass in der Förderrichtung erste und zweite Substratbandabschnitte abwechseln, sprich alternieren, die sich hinsichtlich ihrer in der Förderrichtung gemittelten Substratbandtemperatur und/oder hinsichtlich ihrer Substratbandtemperaturextremwerte unterscheiden. Bevorzugt schwankt die Substratbandtemperatur der ersten und zweiten Substratbandabschnitte um eine Durchschnittstemperatur. Wie später noch erläutert werden wird, ist es besonders bevorzugt, wenn das Substratband zur Substratbandtemperaturvariation in der Förderrichtung mit einem sich in der Förderrichtung wiederholenden Temperaturmuster versehen wird; bei dem sich wiederholenden Temperaturmuster handelt es sich um eine Substratabschnittssequenz, die sich in der Förderrichtung wiederholt. Diese Substratbandabschnittssequenz besteht aus mindestens einem ersten und einem zweiten Substratbandabschnitt, die eine voneinander unterschiedliche Substratbandtemperatur aufweisen. Bevorzugt umfasst eine solche Sequenz mehrere erste und/oder zweite Substratbandabschnitte, bei denen die ersten Substratbandabschnitte eine Substratbandtemperatur aufweisen die von der Substratbandtemperatur der zweiten Abschnitte unterschiedlich ist. Da es sich um sich in der Förderrichtung wiederholende Sequenzen handelt, sind die Sequenzen hinsichtlich der Anzahl der unterschiedlich temperierten Substratbandabschnitte gleich, wobei die sich entsprechenden Substratbandabschnitte unterschiedlicher, insbesondere aufeinander, folgender Sequenzen bevorzugt die gleiche Länge, d.h. Erstreckung in der Förderrichtung und/oder die gleiche Substratbandtemperatur aufweisen.

Besonders gute Ergebnisse im Hinblick auf minimierte (Querschnitts-) Kreisförmigkeitsfehler werden erreicht, wenn die in der Förderrichtung gemittelten Substratbandtemperaturen von ersten und/oder zweiten Substratbandabschnitten eine Temperaturdifferenz aus einem Wertebereich zwischen mindestens 2°C, bevorzugt mindestens 3°C, besonders bevorzugt mindestens 4°C, ganz besonders bevorzugt mindestens 5°C, noch weiter bevorzugt mindestens 6°C aufweisen, wobei es bevorzugt ist, wenn eine maximale Substratbandtemperaturdifferenz der gemittelten Substratbandtemperaturen eine Obergrenze von 15°C, noch weiter bevorzugt von 10°C nicht überschreitet. Zusätzlich oder alternativ können sich die alternierenden ersten und zweiten Substratbandabschnitte hinsichtlich ihrer Substratbandtemperaturextremwerte unterscheiden. Bevorzugt beträgt eine Substratbandtemperaturdifferenz zwischen den Substrattemperaturmaxima der ersten Substratbandabschnitte und den Substratbandtemperaturminima der zweiten Substratbandabschnitte mindestens 2°C, bevorzugt mindestens 3°C, besonders bevorzugt mindestens 4°C, ganz besonders bevorzugt mindestens 5°C, noch weiter bevorzugt mindestens 6°C, wobei es besonders bevorzugt ist, wenn eine Obergrenze für die Differenz zwischen Substratbandtemperaturmaxima und Substratbandtemperaturminima von, insbesondere in den der Förderrichtung benachbarten ersten und zweiten Substratbandabschnitten von 15°C, ganz besonders bevorzugt von 10°C nicht überschritten wird.

Als besonders zweckmäßig hat es sich herausgestellt, wenn die Längenerstreckung, d.h. die Erstreckung in der Förderrichtung der ersten und/oder zweiten Substratbandabschnitte aus einem Wertebereich zwischen 0,5cm und 30cm, bevorzugt zwischen 1,5cm und 25cm, noch weiter bevorzugt zwischen 3cm und 20cm gewählt wird. Ganz besonders zweckmäßig ist es, wenn die Längenerstreckung der ersten und zweiten Substratbandabschnitte so gewählt wird, dass pro fakultativ aus dem Tubenrohr abgelängtem Tubenkörper mindestens ein Temperaturwechsel erfolgt bzw. ein abgelängter, insbesondere gleicher, Tubenkörper zumindest einen Abschnitt eines ersten Substratbandabschnittes und zumindest einen Abschnitt eines zweiten Substratbandabschnittes umfasst, die entlang der Längsachse des Tubenkörpers hintereinander angeordnet sind. In Weiterbildung der Erfindung ist mit Vorteil vorgesehen, dass die ersten und zweiten Substratbandabschnitte eine voneinander unterschiedliche Längenerstreckung, d.h. Erstreckung in der Förderrichtung aufweisen, wobei es besonders bevorzugt ist, wenn die wärmeren Substratbandabschnitte in der Förderrichtung länger sind, insbesondere mindestens doppelt so lang sind als die kühleren Substratbandabschnitte. Insgesamt hat es sich als vorteilhaft herausgestellt, wenn die kühleren Substratbandabschnitte eine Erstreckung in der Förderrichtung zwischen 0,5cm und 6cm und/oder die wärmeren Substratbandabschnitte eine Erstreckung in der Förderrichtung zwischen 3cm und 20cm aufweisen.

Wie bereits erwähnt ist es besonders zweckmäßig, wenn das Substratband mit einem sich in der Förderrichtung wiederholenden Substratbandtemperaturmuster versehen wird. Anders ausgedrückt wiederholt sich in der Förderrichtung bevorzugt mehrfach eine Sequenz/Abfolge von ersten und zweiten Substratbandabschnitten, wobei die Sequenzen im Hinblick auf die Erstreckung (Länge) der ersten und zweiten Substratbandabschnitte in der Förderrichtung und/oder die Substratbandabschnittstemperaturen deckungsgleich sind.

Ganz besonders bevorzugt ist eine Ausführungsform des erfindungsgemäßen Verfahrens und der erfindungsgemäßen Vorrichtung, bei der das Substratband zur Substratbandtemperaturvariation unmittelbar mit über die Zeit variierenden Heiztemperaturen beaufschlagt wird. Zu diesem Zweck sind die Erwärmungsmittel bevorzugt Bestandteil der Substratbandtemperaturvariationsmittel. Im Rahmen dieser Ausführungsform wird das Substratband bevorzugt mit einem zeitlich, d.h. über die Zeit variierenden, sprich modulierten Temperatursignal beaufschlagt. Dies kann beispielsweise erreicht werden durch eine Heizrolle, die an ihrem Umfang abschnittsweise mit einem wärmeisolierenden Klebeband abgeklebt ist oder die temperaturisolierende Einlagen (Inlays) aufweist. Alternativ ist es möglich, das Substratband in der Förderrichtung gleichmäßig zu erwärmen, d.h. mit einem homogenen Temperatursignal zu beaufschlagen und während und/oder vor und/oder nach diesem gleichmäßigen Erwärmen mit einem zeitlich variierenden, insbesondere gepulsten Temperaturerhöhungs- und/oder Temperaturerniedrigungssignal zu beaufschlagen. So wird beispielsweise das Substratband zunächst auf eine konstante Temperatur in der Förderrichtung, beispielsweise mit einer Standartheizrolle erwärmt und danach, beispielsweise mit einem gepulsten Kühlluftstrom in zeitlichen Abständen gekühlt, sodass erste und zweite Abschnitte mit unterschiedlicher Substratbandtemperatur resultieren.

Ein besonders robustes Verfahren bzw. eine besonders robuste Vorrichtungskonstruktion zur Variation der Substratbandtemperatur in der Förderrichtung sieht vor, mindestens eine an dem Substratband abrollende bzw. abrollbare Heizrolle zu realisieren, die in Umfangsrichtung mindestens zwei hintereinander angeordnete Abschnitte, insbesondere Umfangssegmente mit voneinander unterschiedlicher Oberflächentemperatur (Heiztemperatur) aufweist, um somit das Substratband während des Abrollens der Heizrolle in in der Förderrichtung hintereinander angeordneten Abschnitten, insbesondere ersten und zweiten Substratbandabschnitten, unterschiedlich stark zu erwärmen. Im einfachsten Fall kann dies bei dem Einsatz einer Standartheizrolle mit einem in Umfangsrichtung zunächst gleichförmigen Temperaturprofil dadurch erreicht werden, dass die Heizrolle an zumindest einem Umfangsabschnitt mit einem wärmeisolierenden Material, beispielsweise einem Teflonstreifen abgedeckt, insbesondere abgeklebt wird, so dass in dem mindestens einen abgedeckten, insbesondere abgeklebten Bereich während der Kontaktzeit zum Substratband weniger Energie in das Substratband gelangt und dadurch das Substratband beim Verlassen der Heizrolle in den Substratbandabschnitten, die den mindestens einen abgedeckten Bereich, insbesondere den mindestens einen abgeklebten Bereich kontaktiert hatten, eine lokal geringere Temperatur aufweist, als dort, wo das Substratband in Kontakt mit dem mindestens einen benachbart zu dem mindestens einen abgedeckten Bereich Heizrollenbereich, insbesondere Kontakt mit mindestens nicht abgedeckten Bereich der, bevorzugt metallischen, Heizrolle hatte. Je nach Durchmesser der Heizrolle ist es möglich und bevorzugt mehrere in Umfangsrichtung beabstandete abgedeckten, insbesondere abgeklebte und damit wärmeisolierte Abschnitte vorzusehen. Denkbar ist es auch den Außenumfang der Heizrolle abschnittsweise mit unterschiedlichen Materialien zu gestalten. So ist beispielsweise denkbar in eine Heizrolle aus einem ersten Material, insbesondere einem Metallmaterial, mindestens einen Umfangssegmentabschnitt durch einen Einsatz aus einem anderen Material, beispielsweise einem Kunststoffmaterial auszugestalten, um somit ein über den Außenumfang variierendes Heiztemperaturprofil zu erzeugen.

Das in der Substratbandförderrichtung variierende Substratbandtemperaturprofil kann auch durch Beaufschlagen mit einem, insbesondere gepulsten Warmluftstrahl, insbesondere mit zwei eine unterschiedliche Temperatur aufweisenden Warmluftstrahlen erzeugt werden. Auch ist es denkbar, zur Erzielung der Substratbandtemperaturvariation in Förderrichtung einen, insbesondere gepulsten Kaltluftstrahl einzusetzen. Die Kaltluftstrahlbeaufschlagung erfolgt bevorzugt vor und/oder während oder nach dem Erwärmen des Substratbandes mit einer konstanten Heiztemperatur, beispielsweise mit einem Warmluftstrahl und/oder einer Heizrolle, sodass im Ergebnis eine in der Förderrichtung schwankende Substratbandtemperatur resultiert.

Grundsätzlich ist es möglich, dass das Substratband mit einer in Richtung der Breitenerstreckung des Substratbandes variierenden Temperatur erwärmt wird - bevorzugt ist jedoch eine Ausgestaltungsform bei der das Substratband zumindest über den größten Teil seiner Breitenerstreckung, insbesondere über seine gesamte Breitenerstreckung, insbesondere vor dem Schweißschritt, auf eine konstante Substratbandtemperatur erwärmt wird und diese lediglich in der Förderrichtung schwankt.

Im Rahmen der vorliegenden Anmeldung bedeutet der Begriff der Substratbandlängenerstreckung eine Erstreckung des Substratbandes in der Förderrichtung - diese fällt mit der Längserstreckung des späteren Tubenrohres zusammen. Senkrecht dazu erstreckt sich die Substratbandbreitenerstreckung, die ebenso wie die Substratbandförderrichtung senkrecht zur Substratbandmaterialstärke bzw. -dickenerstreckung verläuft. Substratbandbreite und Substratbandlängenerstreckung spannen dabei eine Substratbandfläche auf.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: in einer stark schematisierten Seitenansicht einer nach dem Konzept der Erfindung ausgebildete Vorrichtung zur Durchführung des erfindungsgemäßen Verfahrens,
- Fig. 2: eine Draufsicht auf die Vorrichtung gemäß Fig. 1,
- Fig. 3: eine alternative Ausführungsform einer Vorrichtung zur Durchführung des Verfahrens in einer Draufsicht analog zu Fig. 2, wobei hier das Substratband nicht über die gesamte Breite, sondern ausschließlich außerhalb des Schweißbereichs mit einem in der Förderrichtung variierenden Temperaturprofil belegt wird, und
- Fig. 4: eine weitere alternative Ausführungsform mit einer schrägen-bzw. kreuzförmigen Abklebe- oder Inlaymuster auf der Heizrolle.

In den Figuren sind gleiche Elemente und Elemente mit dergleichen Funktion mit den gleichen Bezugszeichen gekennzeichnet.

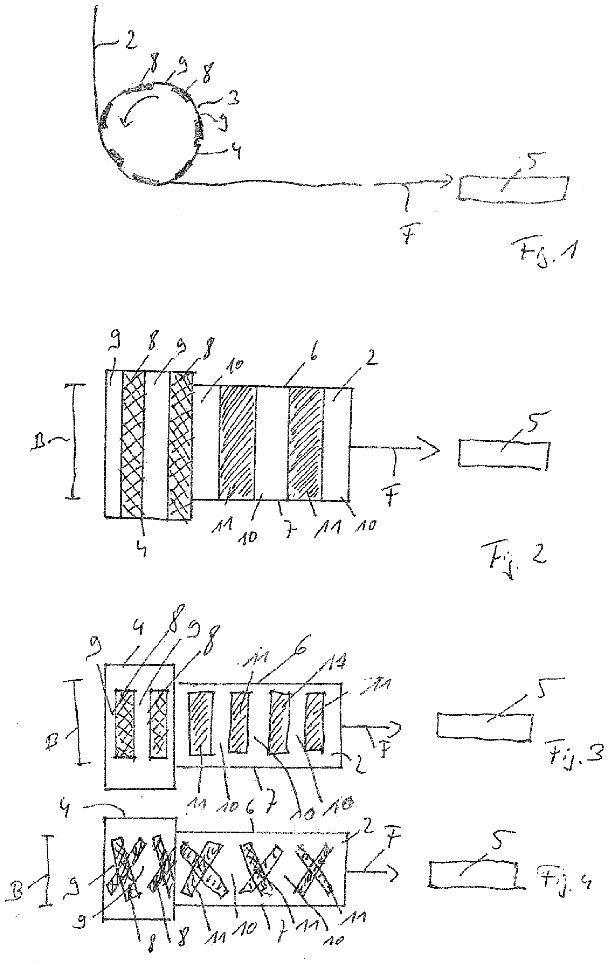

In Fig. 1 ist eine Vorrichtung 1 zur Herstellung von flexiblen, rohrförmigen Tubenkörpern für Verpackungstuben gezeigt. Im Rahmen des weiteren Tubenherstellungsprozesses wird das erhaltene Tubenrohr in die Tubenkörper abgelängt, die dann in einem weiteren Herstellungsschritt mit einem Tubenkopf versehen werden.

Ein bevorzugt als Tubenlaminatband ausgebildetes Substratband 2 wird mittels geeigneter Fördermittel (Antriebsmittel) in einer Förderrichtung F angetrieben und passiert dabei Substratbandtemperaturvariationsmittel 3, das in dem gezeigten Ausführungsbeispiel als Heizrolle 4 ausgebildet ist. Mithilfe der Substratbandtemperaturvariationsmittel 3 wird das Substratband 2 mit einem in der Förderrichtung F variierenden, d.h. eine variierende Substratbandtemperatur in der Förderrichtung F aufweisenden Temperaturprofil versehen. Die Substratbandtemperaturvariation erfolgt, wie aus Fig. 2 ersichtlich ist in dem gezeigten Ausführungsbeispiel über die gesamte, senkrecht zur Förderrichtung F verlaufende Breitenerstreckung B des Substratbandes 2, wobei die Temperaturvariation gemäß einer bevorzugten, hier gezeigten Ausführung vor einem Umformschritt zur Umformung des zunächst noch flachen Substratbandes 2 zu einem Tubenrohr und vor einem Verschweißschritt zum Erzeugen einer Längsschweißnaht erfolgt. Diese Verfahrensschritte sind, da allgemein auf dem vorliegenden Technikgebiet bekannt als Blackbox 5 dargestellt. Nach dem Verschweißen der Rohrform im Bereich von in Fig. 2 gezeigte Längskanten 6, 7 des Substratbandes 2 wird das zunächst endlose Tubenrohr abgekühlt und dann zum Erhalten der einzelnen Tubenkörper abgelängt.

Aus Fig. 1 ist ersichtlich, dass die Heizrolle 4, die entweder aktiv angetrieben ausgestaltet sein kann oder lediglich passiv mittels des Substratbandes 2 rotiert wird umfasst über den Umfang alternierende Abschnitte 8, 9 mit unterschiedlichen Wärmeleitfähigkeiten zur Beaufschlagung des Substratbandes 2, welche wegen der begrenzten Kontaktzeit mit dem Substratband 2 zu unterschiedlichen Substratbandtemperaturen in der Förderrichtung führen. In dem konkreten Ausführungsbeispiel weisen die mit dem Bezugszeichen 9 gekennzeichneten Abschnitte bzw. Umfangssegmente eine höhere Oberflächentemperatur auf als die mit dem Bezugszeichen 8 gekennzeichneten Abschnitte bzw. Umfangssegmente. Die Umfangssegmente 8 können beispielsweise durch sich in der Breitenerstreckungsrichtung B erstreckende Abklebungen oder durch Einsätze aus einem temperaturisolierenden Material, beispielsweise Kunststoff realisiert sein. In dem gezeigten Ausführungsbeispiel ist die Umfangserstreckung der Abschnitte 8, 9 gleich groß. Aufgrund der gleichlangen Erstreckung der Abschnitte 8, 9 in der Umfangsrichtung weisen auch die ersten und zweiten Abschnitte 10, 11 eine gleichlange Erstreckung in der Förderrichtung F auf.

Durch die variierende Temperaturbeaufschlagung resultiert das in Fig. 2 angedeutete in der Förderrichtung F variierende Temperaturprofil mit alternierend angeordneten ersten und zweiten Substratbandabschnitten 10, 11, wobei die Substratbandabschnitte 10 in dem gezeigten Ausführungsbeispiel eine um 5°C höhere in der Förderrichtung gemittelte Temperatur aufweisen als die mit dem Bezugszeichen 11 gekennzeichneten zweiten Substratbandabschnitte. In dem konkreten Ausführungsbeispiel beträgt die mittlere Temperatur der zweiten Substratbandabschnitte 11 60°C und die der ersten Substratbandabschnitte 10 65°C, sodass sich eine Substratbandtemperaturdifferenz der in der Förderrichtung F gemittelten Substratbandtemperaturen der ersten und zweiten Substratbandabschnitte 10, 11 von den genannten 5°C ergibt. Die Temperatur des Substratbandes 2 in der Breitenerstreckungsrichtung B ist konstant (während des Längsschweißprozesses). Im Rahmen der Blackbox 5 wird die Temperatur im Schweißbereich bzw. entlang der Längsschweißnaht deutlich über die Substratbandtemperatur der ersten und zweiten Abschnitte 10, 11 vor dem Schweißvorgang erwärmt, um somit ein Schmelzen zumindest einer Kunststoffschicht des Substratbandes 2 im Bereich der Längskanten 6, 7 zu bewirken um damit eine materialschlüssige Verbindung unter Ausbildung der Längsschweißnaht zu erreichen.

Durch die erfindungsgemäße Temperaturvariation in der Förderrichtung F werden Kreisförmigkeitsfehler im Querschnitt des erhaltenen Tubenrohres minimiert - zudem wird die Prozess-Stabilität erhöht und die Materialbeanspruchung in der Förderrichtung verringert.

In Fig. 3 ist ein alternatives Ausführungsbeispiel gezeigt. Zu erkennen ist, dass sich die abgeklebten oder durch Inlays gebildeten Umfangssegmente der Heizrolle 4 nicht über die gesamte Breite B des Substratbandes 2 erstrecken, sondern dass der äußere (spätere) Schweißbereich ausgespart wird. Über die größere Breitenerstreckung des Substratbandes wird jedoch die Temperatur in der Förderrichtung F variiert.

Das Ausführungsbeispiel gemäß Fig. 4 entspricht im Wesentlichen dem Ausführungsbeispiel gemäß Fig. 3, wobei hier anstelle von rechteckigen Abklebungen oder Inlays schräg verlaufende, sich in der Umfangsrichtung der Heizrolle 4 wiederholende Muster in X- bzw. Kreuzform vorgesehen sind. In dem konkreten Ausführungsbeispiel erstrecken sich diese nicht in den Schweißbereich hinein, sondern unmittelbar bis benachbart dazu. Alternativ sind die Ausführungsvarianten gemäß Fig. 3 und 4 auch derart abwandelbar, dass eine Temperaturschwankung in der Förderrichtung über die gesamte Substratbandbreite B eintritt - hierzu sind lediglich die Abklebungen bzw. Inlays in Richtung der Breitenerstreckung B, d.h. senkrecht zur Förderrichtung F entsprechend zu verlängern.

### Bezugszeichenliste

- 1: Vorrichtung
- 2: Substratband
- 3: Substratbandtemperaturvariationsmittel
- 4: Heizrolle
- 5: Blackbox (Umformen, Schweißen, Abkühle, Ablängen)
- 6: Längskante
- 7: Längskante
- 8: (Umfangs-)Abschnitte der Heizrolle
- 9: (Umfangs-)Abschnitte der Heizrolle
- 10: erster Substratabschnitte
- 11: zweite Substratabschnitte

- F: Förderrichtung
- B: Breitenerstreckung

## Patentansprüche

1. Verfahren zum Herstellen von flexiblen, rohrförmigen Tubenkörpern für Verpackungstuben mit den Schritten:
- Fördern eines mindestens eine verschweißbare Kunststoffschicht aufweisenden oder daraus bestehenden Substratbandes (2), insbesondere eines Tubenlaminatbandes, in einer Förderrichtung (F) relativ zu einer Schweißeinrichtung,
- Formen des zwei sich in der Förderrichtung (F) erstreckende äußere Längskanten (6, 7) aufweisenden Substratbandes (2) zu einem Tubenrohr unter Annäherung, insbesondere in Kontaktbringen, der Längskanten (6, 7),
- Verschweißen Tubenrohres im Bereich der Längskanten (6, 7) unter Ausbildung einer Längsschweißnaht,
- Erwärmen des Substratbandes (2) zur Reduzierung von Kreisförmigkeitsfehlern vor und/oder während und/oder nach dem Verschweißen,
wobei
die Substratbandtemperatur in der Förderrichtung (F) des Substratbandes (2) variiert wird,
**dadurch gekennzeichnet,**
**dass** die Substratbandtemperatur derart variiert wird, dass in der Förderrichtung (F) erste und zweite Substratbandabschnitte (10, 11) abwechseln, die sich hinsichtlich ihrer in der Förderrichtung (F) gemittelten Substratbandtemperatur und/oder hinsichtlich ihrer Substratbandtemperaturextremwerte unterscheiden.

2. Verfahren nach Anspruch 1,
**dadurch gekennzeichnet,**
**dass** eine Substratbandtemperaturdifferenz der in der Förderrichtung (F) gemittelten Substratbandtemperatur von ersten und zweiten Substratbandabschnitten (10, 11) und/oder zwischen alternierenden Substratbandtemperaturmaxima und Substratbandtemperaturminima aus einem Wertebereich mindestens 2°C, bevorzugt mindestens 3°c, besonders bevorzugt mindestens 4°C, ganz besonders bevorzugt mindestens 5°C, noch weiter bevorzugt mindestens 6°C beträgt und/oder aus einem Temperaturbereich zwischen 2°C und 15°C, bevorzugt zwischen 3°C und 15°C, ganz besonders bevorzugt zwischen 4°C und 15°C, noch weiter bevorzugt zwischen mindestens 5°C und 15°C eingestellt wird.

3. Verfahren nach einem der Ansprüche 1 oder 2,
**dadurch gekennzeichnet,**
**dass** eine Erstreckung der ersten und/oder zweiten Substratbandabschnitte (10, 11) in der Förderrichtung (F) aus einem Wertebereich zwischen 0,5cm und 30cm, bevorzugt zwischen 1,5cm und 25cm, besonders bevorzugt zwischen 3cm und 20cm gewählt wird.

4. Verfahren nach einem der vorhergehenden Ansprüche,
**dadurch gekennzeichnet,**
**dass** das Substratband (2) mit einem sich in der Förderrichtung (F) wiederholenden Substratbandtemperaturmuster versehen wird.

5. Verfahren nach einem der vorhergehenden Ansprüche,
**dadurch gekennzeichnet,**
**dass** die Substratbandtemperatur in einem Temperaturbereich oberhalb von 40°C, insbesondere oberhalb von 50°C, noch weiter bevorzugt oberhalb von 55°C, ganz besonders bevorzugt oberhalb von 60°C und unterhalb von 90°C, ganz besonders bevorzugt unterhalb von 80°C variiert wird.

6. Verfahren nach einem der vorhergehenden Ansprüche,
**dadurch gekennzeichnet,**
**dass** das Substratband (2) zur Substrabandtemperaturvariation unmittelbar mit zeitlich variierenden Heiztemperaturen beaufschlagt wird oder alternativ während und/oder vor und/oder nach einer über die Zeit gleichmäßigen Heiztemperaturbeaufschlagung mit zeitlich variierenden Temperaturerhöhungs- und/oder Kühltemperaturen beaufschlagt wird.

7. Verfahren nach einem der vorhergehenden Ansprüche,
**dadurch gekennzeichnet,**
**dass** die Substratbandtemperatur mit mindestens einer an dem Substratband (2) abrollenden Heizrolle (4) variiert wird, die in Umfangsrichtung hintereinander angeordnete Abschnitte (8, 9) mit voneinander unterschiedlicher Oberflächentemperatur aufweist.

8. Verfahren nach einem der vorhergehenden Ansprüche,
**dadurch gekennzeichnet,**
**dass** die Substratbandtemperatur durch Beaufschlagen des Substratbandes (2) mit einem, insbesondere gepulsten, Warmluftstrahl variiert wird.

9. Verfahren nach einem der vorhergehenden Ansprüche,
**dadurch gekennzeichnet,**
**dass** die Substratbandtemperatur, insbesondere nach einem Erwärmen mit einer konstanten Heiztemperatur, durch Beaufschlagen des Substratbandes (2) mit einem, insbesondere gepulsten, Kaltluftstrom variiert wird.

10. Verfahren nach einem der vorhergehenden Ansprüche,
**dadurch gekennzeichnet,**
**dass** die Substratbandtemperatur in der Förderrichtung (F) zumindest über den Großteil der Substratbandbreitenerstreckung (B), insbesondere über die gesamte Substratbandbreitenerstreckung (B) variiert wird.

11. Verfahren nach einem der vorhergehenden Ansprüche,
**dadurch gekennzeichnet,**
**dass** das Substratband (2) zumindest über den Großteil seiner Breitenerstreckung (B), insbesondere über seine gesamte Breitenerstreckung (B) auf eine konstante Substratbandtemperatur erwärmt wird.

12. Vorrichtung zum Herstellen von flexiblen, rohrförmigen Tubenkörper für Verpackungstuben, insbesondere ausgebildet zur Durchführung eines Verfahrens nach einem der vorhergehenden Ansprüche, mit einer Schweißeinrichtung zum Herstellen einer Längsschweißnaht, mit Fördermitteln, ausgebildet zum Fördern eines mindestens eine verschweißbare Kunststoffschicht aufweisenden oder daraus bestehenden Substratbandes (2), insbesondere eines Tubenlaminatbandes, in einer Förderrichtung (F) relativ zu der Schweißeinrichtung, Umformmitteln, ausgebildet zum Formen des zwei sich in der Förderrichtung (F) erstreckende äußere Längskanten (6, 7) aufweisenden Substratbandes (2) zu einem Tubenrohr unter Annäherung, insbesondere in Kontaktbringen, der Längskanten (6, 7), und mit Mitteln zum Erwärmen des Substratbandes (2) zur Reduzierung von Kreisförmigkeitsfehlern vor und/oder während und/oder nach dem Verschweißen, wobei die Vorrichtung (1) Substratbandtemperaturvariationsmittel (3) zum Variieren der Substratbandtemperatur in der Förderrichtung (F) aufweist,
**dadurch gekennzeichnet,**
**dass** die Substratbandtemperaturvariationsmittel (3) eine Heizrolle (4) umfassen, die in Umfangsrichtung, insbesondere unmittelbar, hintereinander angeordnete Abschnitte (8, 9), insbesondere mindestens einen Heizabschnitt und Wärmeisolationsabschnitt, aufweist, die auf voneinander unterschiedliche Heiztemperaturen erwärmt und/oder erwärmbar sind

13. Vorrichtung nach Anspruch 12,
**dadurch gekennzeichnet,**
**dass** die Mittel zum Erwärmen des Substratbandes (2) Bestandteil der Substratbandtemperaturvariationsmittel (3) sind.

## Claims

1. A method for manufacturing flexible, tubular tube bodies for packaging tubes comprising the steps:
- conveying a substrate band (2), in particular a tube laminate band, which comprises at least one weldable plastic layer or is made therefrom, in a conveying direction (F) relative to a welding device,
- forming the substrate band (2), which comprises two outer longitudinal edges (6, 7) extending in the conveying direction (F), to a tube pipe by approaching, in particular contacting, the longitudinal edges (6,7),
- welding the tube pipe in the area of the longitudinal edges (6, 7) by forming a longitudinal welding seam,
- heating the substrate band (2) for reducing errors in circularity before and/or during and/or after welding,
the substrate band temperature being varied in the conveying direction (F) of the substrate band (2),
**characterized in that**
the substrate band temperature is varied in such a manner that first and second substrate band sections (10, 11), which differ with regard to their substrate band temperature averaged in the conveying direction (F) and/or with regard to their substrate band temperature extreme values, alternate in the conveying direction (F).

2. The method according to claim 1,
**characterized in that**
a substrate band temperature difference of the substrate band temperature averaged in the conveying direction (F) of the first and the second substrate band sections (10, 11) and/or between alternating substrate band temperature maximums and substrate band temperature minimums amounts to a temperature range of at least 2 °C, preferably at least 3 °C, more preferably at least 4 °C, even more preferably at least 5 °C, even more preferably at least 6 °C and/or is set to a temperature ranging between 2 °C and 15 °C, preferably between 3 °C and 15 °C, more preferably between 4 °C and 15 °C, even more preferably between 5 °C and 15 °C.

3. The method according to any one of the claims 1 or 2,
**characterized in that**
an extension of the first and/or second substrate band sections (10, 11) in the conveying direction (F) is selected from a value range between 0.5 cm and 30 cm, preferably between 1,5 cm and 25 cm, more preferably between 3 cm and 20 cm.

4. The method according to any one of the preceding claims,
**characterized in that**
the substrate band (2) is provided with a substrate band temperature pattern repeating in the conveying direction (F).

5. The method according to any one of the preceding claims,
**characterized in that**
the substrate band temperature is varied within a temperature range of above 40 °C, in particular above 50 °C, more preferably above 55 °C, even more preferably above 60 °C, and below 90 °C, even more preferably below 80 °C.

6. The method according to any one of the preceding claims,
**characterized in that**
for varying the substrate band temperature, time-varying heating temperatures are directly applied to the substrate band (2) or are alternatively applied thereto during and/or before and/or after an application of a temporally constant heating temperature having time-varying temperature increasing temperatures and/or cooling temperatures.

7. The method according to any one of the preceding claims,
**characterized in that**
the substrate band temperature is varied using at least one heating roll (4) rolling off of the substrate band (2), said heating roll (4) having sections (8, 9) which are disposed in the circumferential direction behind each other and have different surface temperatures.

8. The method according to any one of the preceding claims,
**characterized in that**
the substrate band temperature is varied by means of applying a, in particular pulsed, hot air jet to the substrate band (2).

9. The method according to any one of the preceding claims,
**characterized in that**
the substrate band temperature, in particular after being heated using a constant heating temperature, is varied by means of applying a, in particular pulsed, cold air flow to the substrate band (2).

10. The method according to any one of the preceding claims,
**characterized in that**
the substrate band temperature is varied in the conveying direction (F) over at least the largest part of the substrate band width extension (B), in particular over the entire substrate band width extension (B).

11. The method according to any one of the preceding claims,
**characterized in that**
the substrate band (2) is heated to a constant substrate band temperature over at least the largest part of the width extension (B), in particular over the entire substrate band width extension (B).

12. A device for manufacturing flexible, tubular tube bodies for packaging tubes, in particular realized for carrying out a method according to any of the preceding claims, comprising a welding device for manufacturing a longitudinal welding seam, comprising conveyor means realized for conveying a substrate band (2), in particular a tube laminate band, which comprises at least one weldable plastic layer or is made therefrom, in a conveying direction (F) relative to the welding device; comprising deforming means realized for forming the substrate band (2), which comprises two outer longitudinal edges (6, 7) extending in the conveying direction (F), to a tube pipe by approaching, in particular contacting, the longitudinal edges (6,7); and comprising means for heating the substrate band (2) in order to/so as to reduce errors in circularity before and/or during and/or after welding, the device (1) comprising substrate band temperature variation means (3) for varying the substrate band temperature in the conveying direction (F),
**characterized in that**
the substrate band temperature variation means (3) comprise a heating roll (4) having sections (8, 9), in particular at least one heating section and one thermal insulation section, which are disposed, in particular directly, behind each other in the circumferential direction, said sections (8, 9) being heated and/or being capable of being heated to heating temperatures different from each other.

13. The device according to claim 12,
**characterized in that**
the means for heating the substrate band (2) are components of the substrate band temperature variation means (3).

## Revendications

1. Procédé pour la production des corps de tube flexibles et tubulaires pour des tubes d'emballage selon les étapes suivantes :
- convoyer une bande de substrat (2), particulièrement une bande de stratifié de tube, qui comprend au moins une couche de plastique soudable ou faite de celle-ci, dans une direction de convoyage (F) relative au dispositif de soudage,
- former la bande de substrat (2), qui comprend des bords longitudinaux extérieurs (6, 7) s'étendant dans la direction de convoyage (F), en tuyau tubulaire lors de l'approchement, particulièrement lors de la mise en contact, des bords longitudinaux (6, 7),
- souder le tuyau tubulaire dans la zone des bords longitudinaux (6, 7) lors de la formation d'une soudure longitudinale,
- chauffer la bande de substrat (2) pour la réduction des erreurs circulaires avant et/ou pendant et/ou après le soudage,
dans lequel
la température de bande de substrat est variée dans la direction de convoyage (F) de la bande de substrat (2),
**caractérisé en ce que**
la température de bande de substrat est variée de telle manière que des premières et des deuxièmes sections de la bande de substrat (10, 11) alternent dans la direction de convoyage (F), lesdites premières et deuxièmes sections se différenciant par rapport à leur température de bande de substrat moyennée dans la direction de convoyage (F) et/ou par rapport à leurs valeurs extrêmes de la température de bande de substrat.

2. Procédé selon la revendication 1,
**caractérisé en ce qu'**
une différence de température de bande de substrat s'élève à la température de substrat moyennée dans la direction de convoyage (F) des premières et des deuxièmes parties de bande de substrat (10, 11) et/ou entre des maximums de bande de température de substrat et des minimums de température de bande de substrat s'alternant d'une plage de valeur d'au moins 2 °C, de préférence au moins 3 °C, d'une préférence élevée au moins 4 °C, d'une préférence particulièrement élevée au moins 5 °C, d'une préférence plus élevée au moins 6 °C, et/ou est adaptée d'une plage de valeur d'entre 2 °C et 15 °C, de préférence entre 3 °C et 15 °C, d'une préférence particulièrement élevée entre 4 °C et 15 °C, d'une préférence plus élevée entre 5 °C et 15 °C.

3. Procédé selon l'une quelconque des revendications 1 ou 2,
**caractérisé en ce qu'**
une extension des premières et/ou des deuxièmes sections de bande de substrat (10, 11) dans la direction de convoyage (F) est choisie d'une plage de valeur entre 0,5 cm et 30 cm, de préférence entre 1,5 cm et 25 cm, d'une préférence élevée entre 3 cm et 20 cm.

4. Procédé selon l'une quelconque des revendications précédentes,
**caractérisé en ce que**
la bande de substrat (2) est fournie d'un motif de température de bande de substrat se répétant dans la direction de convoyage (F).

5. Procédé selon l'une quelconque des revendications précédentes,
**caractérisé en ce que**
la température de bande de substrat est variée dans une plage de température au-dessus de 40 °C, particulièrement au-dessus de 50 °C, d'une préférence plus élevée au-dessus de 55 °C, d'une préférence particulièrement élevée au-dessus de 60 °C et au-dessous de 90 °C, d'une préférence particulièrement élevée au-dessous de 80 °C.

6. Procédé selon l'une quelconque des revendications précédentes,
**caractérisé en ce que**
pour la variation de température de bande de substrat, la bande de substrat (2) est soumise immédiatement à des températures de chauffage qui varient temporellement ou est soumise alternativement à des températures d'échauffement de température et/ou des température de refroidissement qui varient temporellement pendant et/ou avant et/ou après une soumission à la température de chauffage constante pendant un temps.

7. Procédé selon l'une quelconque des revendications précédentes,
**caractérisé en ce que**
la température de bande de substrat est variée d'au moins un rouleau chauffant (4) débobinant à la bande de substrat (2), ledit rouleau chauffant (4) comprenant des sections (8, 9) disposées l'une après l'autre dans la direction circonférentielle et ayant des températures de surface différentes les unes par rapport aux autres.

8. Procédé selon l'une quelconque des revendications précédentes,
**caractérisé en ce que**
la température de bande de substrat est variée par la soumission à la bande de substrat (2) par un jet d'air chaud, particulièrement impulsionnel.

9. Procédé selon l'une quelconque des revendications précédentes,
**caractérisé en ce que**
la température de bande de substrat est variée, particulièrement après un échauffement d'une température de chauffage constante, par la soumission à la bande de substrat (2) d'un jet d'air froid, particulièrement impulsionnel.

10. Procédé selon l'une quelconque des revendications précédentes,
**caractérisé en ce que**
la température de bande de substrat est variée dans la direction de convoyage (F) au moins à travers la grande partie de l'extension de bande de substrat dans la largeur (B), particulièrement à travers l'extension de bande de substrat dans la largeur entière.

11. Procédé selon l'une quelconque des revendications précédentes,
**caractérisé en ce que**
la bande de substrat (2) est chauffée au moins à travers la grande partic de son extension dans la largeur (B), particulièrement à travers de son extension dans la largeur entière (B), à une température de bande de substrat constante.

12. Dispositif pour la production des corps de tube flexibles et tubulaires pour des tubes d'emballage, particulièrement réalisé pour la réalisation d'un procédé selon l'une quelconque des revendications précédentes, ayant un dispositif de soudage pour la production d'une soudure longitudinale, ayant des moyens de convoyage, réalisé pour convoyer une bande de substrat (2), particulièrement une bande de stratifié de tube, qui comprend au moins une couche de plastique soudable ou faite de celle-ci, dans une direction de convoyage (F) relative au dispositif de soudage, des moyens de transformation, réalisés pour former la bande de substrat (2), qui comprend deux bords longitudinaux extérieurs (6, 7) s'étendant dans la direction de convoyage (F), en tuyau tubulaire lors de l'approche, particulièrement pour la mise en contact, des bords longitudinaux (6, 7), et ayant des moyens pour échauffer la bande de substrat (2) pour la réduction des erreurs circulaires avant et/ou pendant et/ou après le soudage, ledit dispositif (1) comprenant des moyens de variation de température de bande (3) pour varier la température de bande de substrat dans la direction de convoyage (F),
**caractérisé en ce que**
les moyens de variation de température de bande de substrat (3) comprennent un rouleau de chauffage (4) qui comprend des sections (8, 9), particulièrement au moins une section de chauffage et une section d'isolation thermique, qui sont disposées, particulièrement immédiatement, les unes après les autres et sont chauffées et/ou qui peuvent être chauffées aux températures de chauffage différentes des unes aux autres.

13. Dispositif selon la revendication 12,
**caractérisé en ce que**
les moyens pour chauffer la bande de substrat (2) font partie des moyens de variation de température de bande de substrat (3).
